# EUROPEAN PATENT SPECIFICATION

(11) **EP 2 777 944 B1**
(45) Date of publication and mention of the grant of the patent: **21.03.2018**
(21) Application number: 14000661.0
(22) Date of filing: 25.02.2014
(51) Int. Cl.: B60B 21/02, B60B 21/06, B60B 5/02, B41J 3/407, B41M 5/025, F15D 1/00

(54) **Vehicle rim with print graphics and methods of making**
Fahrzeugfelge mit Druckgraphik und Herstellungsverfahren
Jante de véhicule avec graphiques d'impression et procédés de fabrication

(30) Priority: 13.03.2013 US 201313800574
(43) Date of publication of application: 17.09.2014
(60) Divisional application: 15000667.4
(73) Proprietor: SRAM, LLC., Chicago, IL 60642 (US)
(72) Inventor: Brady, Patrick, Chicago, 60640 (US); Wesling, Kevin, Lombard, 60648 (US)
(74) Representative: Thum, Bernhard

(56) References cited:
- EP-A1- 2 030 805
- EP-A1- 2 322 357
- EP-A1- 2 639 462
- WO-A1-2005/102237
- WO-A2-2005/100050
- WO-A2-2007/033031
- WO-A2-2007/146014
- DE-A1-102012 006 371
- JP-A- 2000 247 101
- US-A- 6 059 377
- US-A1- 2006 005 440
- US-A1- 2006 068 109
- US-A1- 2007 029 868
- US-A1- 2008 248 897
- US-A1- 2011 115 280
- US-A1- 2012 049 610
- US-A1- 2013 036 928
- US-B1- 6 179 732
- US-B1- 7 579 386
- US-B2- 6 490 968
- US-B2- 6 736 055
- US-B2- 7 114 785
- US-B2- 7 775 540
- "The zipp dimple factor", Weight Weenies, 19 November 2009 (2009-11-19), pages 1-12, XP055245890, Retrieved from the Internet: URL:http://weightweenies.starbike.com/foru m/viewtopic.php?f=5&t=65445 [retrieved on 2016-01-29]

## Description

### BACKGROUND OF THE INVENTION

The invention relates to bicycle wheels. In particular, the invention is directed to a rim according to the preamble of claim 1.

It has become commonplace to mark bicycle rims with various indicia, images, words and other graphics. With the widespread acceptance of deep-section rims among professional racers and amateurs alike, manufacturers have recognized the "billboard" opportunities presented by the significant amount of rim area. A notable example of such a rim is exemplified in U.S. Patent No. 7,114,785 directed to a "disc" wheel for a bicycle. The patent illustrates both carbon fiber reinforced plastic construction and surface features.

Patent document US 2012/0049610 A1 discloses a wheel rim including a braking surface and a wear indicator located beneath the braking surface. When the braking surface is worn away, the wear indicator is visually exposed.

U.S. Patent No. 6,059,377 discloses a wheel rim frame including a bottom portion. A sticker printed with various patterns is attached to the bottom portion and a protective membrane overlays the sticker.

Further prior art wheel rims are known from documents US 2011/0115280 A1, EP 2 030 805 A1 and EP 2 639 462 A1.

Bicycle rims, for example carbon fiber reinforced plastic (CFRP) bicycle rims, have increasingly been labeled, marked or coated in a number of conventional methods with conventional materials. With respect to marking a rim graphically, conventional methods typically involve a form of contact printing in which ink is applied onto a sheet film decal substrate made of a polyvinyl chloride, polyester, polyolefin, polycarbonate and/or cellulose (calendared wood fiber paper), for example. The printing of the graphics on the substrate is performed by screen printing, offset printing, thermal printing, or inkjet printing, for example. The printed substrate typically has a pressure-sensitive, contact adhesive applied to the reverse surface (i.e., the non-printed surface) and is die-cut to create an appropriate shape and size to fit onto a rim as desired.

A similar method of decal construction consists of a substrate which is made of a cured printed ink resin, with a printed adhesive layer, which is applied to a coated paper or resin carrier film and then later removed by immersing the carrier/decal in a water or hydrocarbon solvent solution to remove the ink film from the carrier. The solid ink film is then carefully applied to the receiving part or object followed by the application of light pressure to remove most of the solvent, then cured with heat, typically in an oven, to activate the adhesive to thereby bond the ink resin to the receiving substrate.

Another conventional printing method for marking a rim graphically without an intermediate substrate is known as tampo-printing or pad printing. Tampo-printing employs a silicone rubber stamp or pad which transfers an ink shape or image from a plate, which is etched or engraved with a graphical shape, and is then filled with ink and carried to the receiving part by contact with the rubber pad.

Bicycle rims are known that employ non-smooth surfaces or surface features, to yield measurable aerodynamic benefits. In one example, a CFRP rim is manufactured with a plurality of surface features in the form of "dimples" that have proven surprisingly effective in reducing the drag signature of the rim in use on a bicycle. Furthermore, the process of creating the tools to manufacture CFRP rims with surface features can be expensive. Unfortunately, the printing technology commonly in practice tends to cover up pre-existing surface features, which obscures and may signifcantly reduce the effectiveness of the features.

The current methods for industrially marking a rim as briefly noted above have technical disadvantages, some of which are described below:
- Printed decal with pressure sensitive adhesive, i.e. a self-adhesive sticker - arguably the most common method of marking - graphic image size can be limited due to the adhesive tack of the substrate; graphic shapes are limited by the complexity of die cutting the substrate; decal substrate cannot adequately conform to non-smooth surface features; substrate has significant mass; relative hardness of the substrate is inadequate to provide durability; adhesive bond is not permanent.
- Solvent applied decal with adhesive cured by baking - does not conform to non-smooth geometry; rim defects spoil decal; long curing schedule; must be applied by hand.
- Water applied decal -painting topcoat required; does not conform to non-smooth geometry; rim defects damage the substrate during the curing process; must be applied by hand.
- Direct screen printing - rim receiving surface does not permit this method when the rim is not adequately flat or smooth.
- Direct pad printing - large graphic surface area prohibitive to the application process.
- Laser etching - colors not possible; low contrast; large graphic is cost prohibitive.
- Dye sublimation of an offset printed image - lacks white pigment to make colors visible.

It can be seen from the above that providing graphics and/or surface features to bicycle rims, especially carbon fiber rims, can be challenging if low-cost, high-quality permanent graphics are desired that do not negatively affect the function of the rim. Therefore, there is a need to provide a high-quality printing method and system for printing bicycle rims. The invention satisfies the need.

### BRIEF SUMMARY OF THE INVENTION

In light of the present need for an improved printed bicycle rim and methods therefor, a brief summary of exemplary embodiments of the invention is presented. Some simplifications and omissions may be made in the following summary, which is intended to highlight and introduce some aspects of the various exemplary embodiments, but not to limit the scope of the invention. Detailed descriptions of a preferred exemplary embodiment adequate to allow those of ordinary skill in the art to make and use the inventive concepts will follow in later sections, but it should be understood that minor variations of these concepts are contemplated by the invention, and in particular those variations within the grasp of one with ordinary skill in the art.

Inkjet printing is a relatively new method of printing and has emerged in recent years, in large part due to advancements in ink technology and an improved method for depositing and curing ink. In general, the invention is directed to use of an inkjet printing mechanism to deposit non-contact printed graphics and/or surface features onto an image-receiving area of a bicycle rim.

Generally, the invention contemplates the deposition of organized colors in the form of very fine droplets of ink onto a bicycle rim by means of an electromechanical "inkjet" printhead in a scanning (back and forth) motion along X and Y coordinates in a horizontal plane. The deposited ink droplets may coalesce to form a line and lines may coalesce to form a film layer. Furthermore, layers can be added to previously deposited and cured layers to create 3-dimensional features and/or patterns.

In addition, the invention contemplates the deposition of organized colors in the form of very fine droplets of ink onto a bicycle rim by means of an electromechanical "inkjet" printhead in a motion along X, Y and Z coordinates. This method tends to minimize the loss of accuracy and resolution that can occur when ink is deposited with the inkjet printhead and the receiving substrate spaced more than about 6 mm apart.

Deposition of ink is accompanied by and/or followed by photopolymerization curing of the deposited ink, initialized by exposure to strong ultraviolet (UV) light. The deposited and cured ink forms a thin, uniform, durable graphic film that withstands adverse environmental conditions, i.e. scratches, abrasion, corrosion, washing, and sunlight, encountered during use of the product throughout its lifespan. The means of curing the ink is not limited to UV curing.

What has been discovered is that this method of depositing and curing ink is an effective means of depositing single and multiple layers of resin ink onto a bicycle rim, and in particular, for example ZIPP® FIRECREST® rims which have a substantial span of relatively planar and parallel sidewalls. In addition, because this method for depositing ink does not involve contact with the receiving surface, as required by previous methods of deposition, it proves to be an extremely precise method for applying a coating, graphical or otherwise, onto a non-smooth featured surface while depositing a uniform layer of desired thickness, with the surprising result of preserving the shape and size of any preexisting features on the surface with accuracy not easily achievable by other known techniques.

While inkjet printing is well suited for applying a thin and uniform film thickness, it may also be adapted to deposit and bond multiple layers of ink onto the rims selectively through numerical control, thereby creating desired 3-dimensional geometric patterns or shapes onto the rim surface. This offers an effective means for optimizing the size and shape and quantity of a plurality of surface features deposited on the rim surface, which may function to reduce surface drag on the rim. Inkjet printing may also provide other types of desirable rim elements and advantages.

It will be understood, for purposes of this disclosure, that surface features contemplate any 3-dimensional elements that are pre-existing features of the rim and/or 3-dimensional elements that are deposited onto the rim via inkjet deposition. Deposition features will be understood to mean any elements that are added to the rim by inkjet deposition - including but not limited to graphics, 3-dimensional elements that could be in the form of surface features, and uniform layers of material.

Another benefit of this deposition method and its inherent efficiency allows for the elimination of the adhesive backed substrate used in conventional methods. By eliminating the substrate and applying only the ink to the rim, a weight savings of greater than 30 grams can be achieved conservatively. Eliminating the substrate and the processing steps, e.g. die cutting, weeding, and assembly that follow a conventional printing process allow for a cost savings in excess of 90%.

Furthermore, this same printing method can be utilized as a means to coat with a protective layer (paint) a bicycle rim selectively with precision not achievable by conventional methods. An example of this would be the painting of a recessed hole or feature which functions as a wear indicator on a wheel rim brake track. The existing practice involves multiple steps and a particular order of operations, which adds substantial cost and time to the manufacturing process.

Furthermore, non-contact printing inherently avoids the application of lateral - out of plane - loads to the generally planar FRP surfaces, which are designed to carry in-plane loads.

One aspect of the invention provides a rim for a bicycle wheel having a center plane, including a tire-engaging portion located at an outer perimeter of the rim. An inner perimeter portion is located radially inwardly from the tire-engaging portion. A first sidewall and a second sidewall spaced from the first sidewall extend between the tire-engaging and the inner perimeter portions. A plurality of surface features are formed in the first and second sidewalls and a non-contact printed graphic is disposed on one or both of the first and second sidewalls, wherein the non-contact printed graphic is applied onto a non-smooth featured surface, and wherein the non-contact printed graphic substantially preserves the size and shape of the plurality of surface features.

Other aspects of the invention provide wherein the surface features are sized and shaped to create a turbulent surface layer when the wheel travels through air to reduce aerodynamic drag. The non-contact printed graphic may be deposited with an inkjet printer. The rim includes an image receiving area located on the first and second sidewalls, the image receiving area being within 30 degrees of parallel to the center plane of the rim; and wherein the non-contact printed graphic is disposed on at least some of the image receiving area. The image receiving area may be generally parallel to the center plane. The image receiving area may be located at a non-contact deposition distance of less than about 6.5 mm.

According to another aspect a rim for a bicycle wheel can be provided having an axis about which the wheel rotates and a center plane normal to the axis, including a tire-engaging portion located at an outer perimeter of the rim. An inner perimeter portion can be located radially inwardly from the tire-engaging portion. A first sidewall and a second sidewall spaced from the first sidewall can extend between the tire-engaging and inner perimeter portions. An image receiving area can be located on each of the first and second sidewalls, each of the image receiving areas being within 30 degrees of parallel to the center plane of the rim and a non-contact printed deposition feature can be disposed on at least some of the image receiving area.

Other aspects can provide a rim of claim wherein the non-contact printed deposition feature includes a graphic. The non-contact printed deposition feature may include a surface feature and/or a uniform film. The image receiving area may be generally parallel to the center plane. The image receiving area may be located at a non-contact deposition distance of less than about 6.5 mm. The rim may be made of FRP.

Another aspect may also contemplate a method of forming surface features on a wheel rim, including the steps of providing a wheel rim including a tire-engaging portion located at an outer perimeter of the rim, an inner perimeter portion located radially inwardly from the tire-engaging portion, a first sidewall, and a second sidewall spaced from the first sidewall, the first and second sidewalls extending between the tire-engaging portion and the inner perimeter portions and depositing one or more layers of material to the wheel rim with a non-contact printer in a selected pattern to form a plurality of deposition features on the first and second sidewalls.

Also, the invention may contemplate a method of apply graphics to a wheel rim, including providing a wheel rim including a center plane, a tire-engaging portion located at an outer perimeter of the rim, an inner perimeter portion located radially inwardly from the tire-engaging portion, a first sidewall, and a second sidewall spaced from the first sidewall, the first and second sidewalls extending between the tire-engaging and inner perimeter portions and depositing ink with a non-contact printer on the first and second sidewalls at a deposition angle within about 30 degrees of parallel to the rim center plane.

These and other features and advantages of the present invention will be more fully understood from the following description of one or more embodiments of the invention, taken together with the accompanying drawings.

### BRIEF DESCRIPTION OF THE SEVERAL VIEWS OF THE DRAWINGS

Fig. 1 is a rim for a bicycle wheel including surface features;
Fig. 2 is a system for non-contact printing of rims for a bicycle wheel;
Fig. 3 is the bicycle wheel of Fig. 1 illustrating an image receiving area of the rim;
Fig. 4 is a diagram illustrating a printhead assembly with a plurality of printheads and light sources;
Fig. 5 is a diagram illustrating different forms of deposition; and
Fig. 6 shows several methods of non-contact printing of rims.

### DETAILED DESCRIPTION OF THE INVENTION

Embodiments of the invention will herein be described with reference to the drawings. It will be understood that the drawings and descriptions set out herein are provided for illustration only and do not limit the invention as defined by the claims appended hereto and any and all their equivalents. For example, the terms "first" and "second," "front" and "rear," or "left" and "right" are used for the sake of clarity and not as terms of limitation. Moreover, the terms refer to bicycle mechanisms conventionally mounted to a bicycle and with the bicycle oriented and used in a standard fashion unless otherwise indicated.

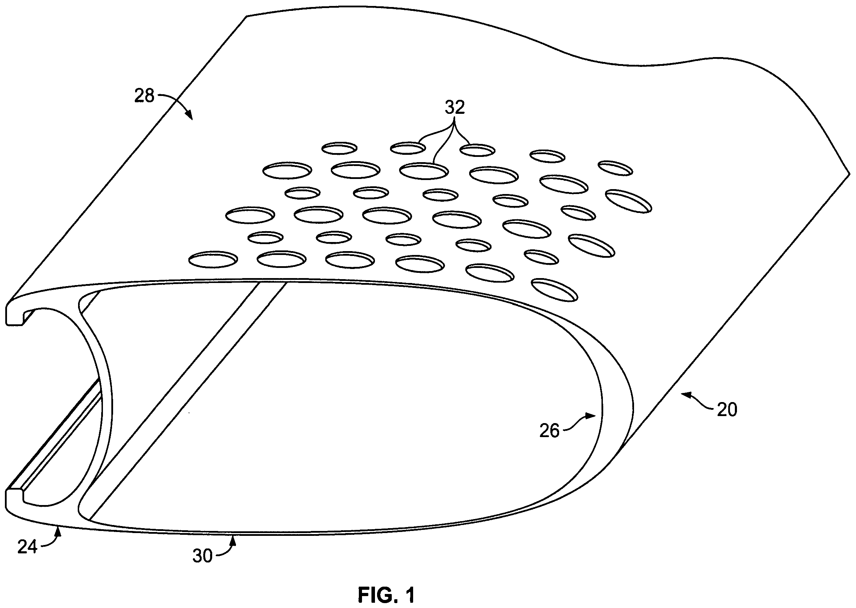

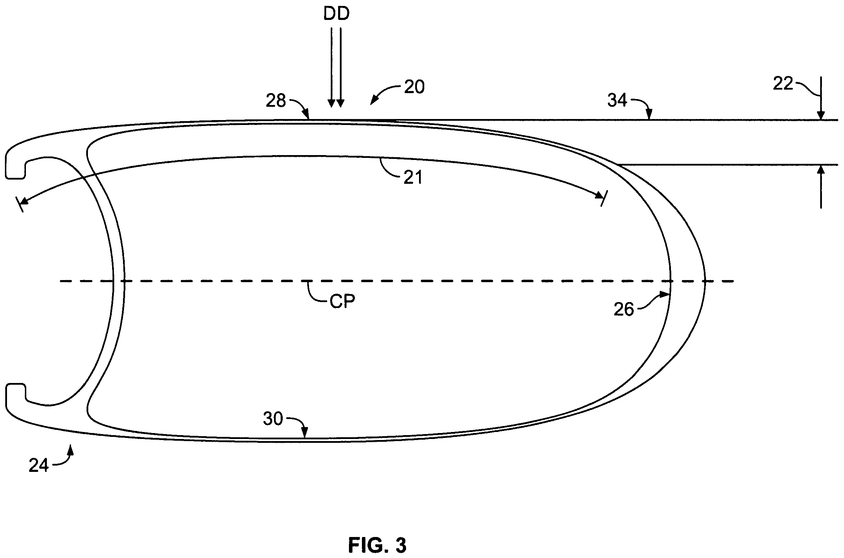

Figs. 1 and 3 show one embodiment of a rim 20 for a bicycle to which a non-contact printed graphic may be applied. The rim 20 includes a tire-engaging portion 24 located at the outer perimeter of the rim, an inner perimeter portion 26 located radially inwardly from the tire-engaging portion, and a pair of sidewalls 28, 30 extending in a radial direction between the inner perimeter portion and the tire-engaging portion to form the sides of the rim. In the illustrated embodiment, a major portion of the sidewalls 28, 30 is parallel or substantially parallel, i.e., within a few degrees of parallel, to the center line or center plane CP of the rim. In one embodiment, the major portion of the sidewalls 28, 30 forms the image receiving area of the rim.

The sidewalls 28, 30 may contain a plurality of surface features 32 designed, for example, to create a turbulent boundary layer when a wheel, including the illustrated rim, travels through air to reduce aerodynamic drag on the wheel. Alternatively, the sidewalls 28, 30 may be free of surface features. The surface features 32 may be positive or negative features (i.e., protrusions or recesses) with an elevation which is offset relative to the plane of the sidewalls 28, 30 of the rim 20. The surface features 32 may be designed to create a turbulent boundary layer when the rim 20 travels through air to reduce aerodynamic drag. The surface features 32 may also include wear indicators as noted above.

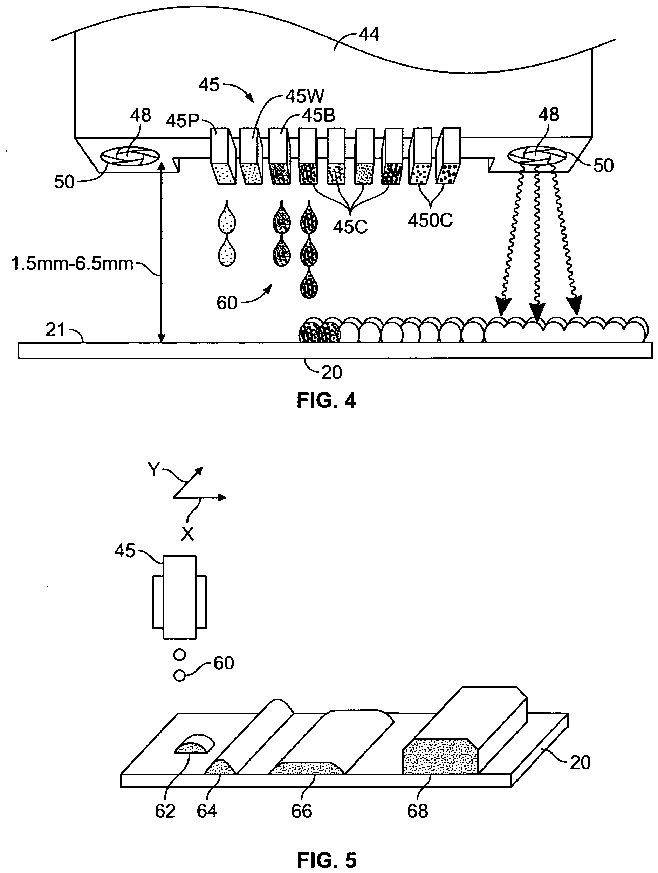

Fig. 3 shows an image receiving area 22 of the rim 20, also indicated at 21. The image receiving area 21 may be considered the area of the rim on which an inkjet printer can position ink in a desired manner. In an embodiment where the inkjet printer head (see Fig. 4) moves only along X-Y coordinates, the image receiving area 22 may be considered the area of the rim 20 that is no more than about 6.5 mm from the inkjet printhead. In practice, the inkjet printhead may be positioned about 1.5 mm from the part of the rim closest to the printhead (see Fig. 4). In the drawings, CP defines a center plane of the rim. The closest part of the rim in Fig. 3 to the printhead is indicated at 34, which represents the laterally outermost extent of the sidewalls 28, 30 relative to the center plane CP. As the curvature of the rim slopes away from the outermost extent 34 and inwardly toward a center plane CP of the rim, the area of the rim being printed upon becomes more distant from the printhead, i.e., greater than 1.5 mm. When the distance between the printhead and the rim part being printed upon exceeds about 6.5 mm, in one example, the accuracy of the printing may degrade and, therefore, the part of the rim that exceeds the distance indicated at 22 is not considered the image receiving area 21. For purposes of this disclosure, the distance indicated at 22 will be referred to as the non-contact deposition distance. In one embodiment, the non-contact deposition distance should be less than about 6.5 mm.

Of course, it will be understood that if the printhead can be moved vertically, the image receiving area of the rim on which ink may be accurately positioned will be maximized, and also, different ink jet devices may exhibit greater or lesser ranges of deposition accuracy.

The angle of the surface of the rim 20 that receives deposited ink can also affect the quality of the deposited graphic. Ink is directed at the rim a deposition direction DD that is generally normal to the center plane CP when the rim 20 is held in the tool 40. Ink strikes the rim 20 at an angle that may be referred to as the deposition angle. When ink is deposited at an angle normal to the surface of the rim 20, for purposes of this application, the deposition angle will be considered to be zero (0). A graphic deposited on the rim 20 at a deposition angle of zero will not be distorted. Material in the form of a graphic deposited on the rim 20 at a deposition angle greater than zero will be distorted an amount proportional to the deposition angle. Therefore, in one embodiment, the image receiving area 21 may be considered to be the area of the rim wherein the deposition angle is less than about 30 degrees. An area of the rim 20 where the deposition angle is greater than about 30 degrees, due to the slope of the rim relative to the center plane CP, has the potential to render graphics unacceptably distorted, depending upon the specifics of the graphic.

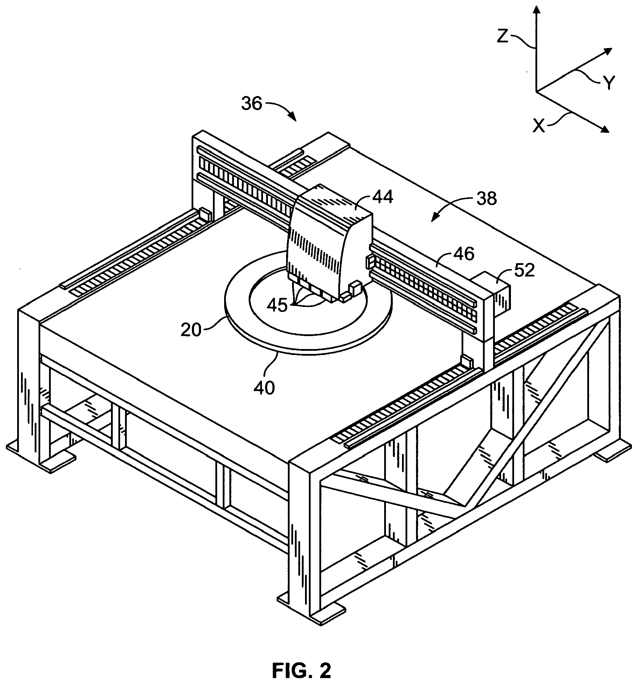

Fig. 2 shows a printer system 36 for non-contact printing of rims for a bicycle wheel. The printer system 36 includes a generally flat, horizontal bed 38 which forms the receiving area for the rim 20 and a printhead housing 44 positioned above the bed.

Referring also to Fig. 4, the printer system 36 includes a printhead housing 44, containing a plurality of inkjet printheads 45, which may be piezo-electromechanical devices. The inkjet printheads 45 deposit a predetermined volume of ink drops on-demand when triggered by an electrical impulse. The inkjet printheads 45, which may number from one to eight per ink color for example, are moved across the bed by a gantry 46, which moves the inkjet printheads along controlled X and Y coordinates over the bed in a back-and forth scanning motion. In the alternative, the inkjet printheads move along controlled X, Y and Z coordinates.

The inkjet printheads 45 drop a series of very precise drop volumes of ink, in the range of 1-300 picoliters, onto the rim 20 by the system and typically driven by raster software, to deposit a collection of drops in one or more layers of organized color. The deposition of ink constructs an image, shape or swath, for example, which reflects or recreates the appearance of the original electronic artwork image file.

The printer system 36 includes one or more light sources 48 disposed on or in the printhead housing 44. The light sources 48 are typically mercury-iron arc lamps with a spectral output of 350-450nm to cure the deposited ink. Shutter devices 50 may also be provided as part of the system 36 and positioned to regulate each of the light sources 48.

The inkjet printheads 45 may be arranged in the housing 44 in any suitable manner. One such embodiment positions an inkjet printhead containing, in sequence, a primer 45P, a white ink 45W, and a black ink 45B. Additionally, inkjet printheads containing various colors 45C may be positioned to deposit ink after the black ink printheads 45B. Furthermore, the inkjet printheads may print clear coats 450C, in a glossy or matte form for example, over the previously deposited ink layers or as a sole protective layer over the substrate itself.

The bed 38 may include a holding tool 40, which is a portion of or an additional fixture of the bed that is sized and shaped to receive and hold the rim 20. The holding tool 40 may include a circular depression. The holding tool 40 may include a vacuum clamp, or another means of releasably securing the rim 20 in place on the bed 36. The bed positions the rim 20 vertically and horizontally such that the rim is within a desired vertical no-contact distance of the printheads 44 and such that ink is deposited in the desired positions on the rim. The desired, optimal distance from the printheads 44 to the outermost extent 34 of the rim 20 may be about 1.5 mm. It will be understood that the optimal deposition distance from the printhead to the sidewall surface is dependent upon the particular inkjet system being employed.

The printer system 36 includes conventional control circuitry 52 to control mechanical and electrical components of the system and which also may convert the electronic image data file sent to the system into a form such that the system can print the image or images.

In use, the printer system 36 is typically electronically supplied with an "artwork" file, e.g., one or more digital image composed of shapes, which is converted or has been converted into a raster image composed of dots or pixels.

During operation, the printer system 36 deposits an ink resin which may be a UV-curable ink matrix. The ink can be mainly acrylic monomers with a curing (i.e., catalyzing or polymerizing) initiator component. After deposition, the ink is cured by exposure to strong UV-light from the light source 48. The advantage of UV-curable inks is that the ink is "dry" as soon as it is cured, thus, UV-curable inks can be applied to a wide range of uncoated substrates and result in a very robust image and coating. The ink is formulated to have a surface tension which is compatible with the substrate, which is considered a well-known skill in the art of ink formulation.

Once the ink is deposited onto the substrate (rim 20) it must be cured, i.e., converted from a liquid state to a solid which bonds chemically to the target position on the rim and develops an adhesive and cohesive strength which provides a useful durability for the conditions experienced in use.

The ink contains photo-initiators that absorb the UV energy from the light source 48. Upon exposure, a chemical reaction occurs that converts the liquid ink into a solid film. The ink contains monomers that function as solvents because of their ability to reduce viscosity and combine with other ink components. Thus, the ink compositions are 100% percent solids and do not release volatile organic compounds (VOCs). Monomers also add improved film hardness and resistance properties. The ink also contains oligomers that determine the final properties of the cured ink film, including its elasticity, outdoor performance characteristics and chemical resistance. The ink colorants may be dye-based or pigment-based. Usually, the colorants are pigment-based because of the greater light fastness and durability of pigments compared with dyes. Pigments used in outdoor advertising and display applications have similar requirements to those used in automotive paints. Consequently, there is some crossover of use. While a pigment is selected on the basis of the required application, size control and reduction along with dispersion technique are major components of ink formulation.

The ink is exposed to UV radiation whereupon a chemical reaction takes place. The photo-initiators cause the ink components to cross-link into a solid. Typically a shuttered mercury-vapor lamp 48 is positioned on either side of the printhead, and produces a great amount of heat, although the heat is not considered a mechanism in the curing process. A shuttered mercury-vapor lamp 48 is used for free radical UV ink, which is what the majority of flatbed inkjet systems use.

UV cured inks do not evaporate, but rather cure or set as a result from this chemical reaction. No material is evaporated or removed, which means 100% of the delivered volume is used to provide coloration. This reaction happens very quickly, which leads to nearly instant drying and results in a completely cured graphic in a matter of seconds. This enables a fast printing process. As a result of this nearly instant chemical reaction no solvents penetrate the substrate once it ink is deposited thereupon, which allows for sharp, highly opaque, and saturated prints.

Fig. 5 shows a simplified version of a rim 20 and an inkjet printhead 45 which can deposit ink 60. Depending upon where each ink deposition is positioned in relation to other depositions, the ink can take on a variety of forms on the substrate, and can take be arranged as graphic (images and words, for example) and/or non-graphic depositions. For example, a single dot or point 62 of ink 60 will form a discrete dot or point of ink. If multiple dots of ink 60 are deposited in an interconnected line or series of closely spaced dots, the ink forms a discrete line 64. If multiple lines of ink 60 are deposited in parallel and sufficiently close to coalesce, a 2-dimensional layer or band 66 is formed. The thickness of the band 66 is dependent upon how many lines are deposited. If ink 60 is layered vertically, a 3-dimensional deposition feature 68 can be formed. It will be understood that any deposition of ink will be considered to be a deposition feature, regardless of whether the feature is a thin graphic or a relatively 3-dimensional feature. In this manner, the inkjet printer system can be used to convert a smooth rim substrate into a rim having surface features that are created by inkjet printing after manufacture of the rim or, in the alternative, the deposition features can form additional surface features on a rim that has preexisting surface features created during the manufacture of the rim, for example. The complexity and size of the deposition features 68 are only limited by the ability of the inkjet printer system 68 to deposit ink. Deposition features 68 will therefore be understood to mean any features and/or surface features that are created by a non-contact deposition method.

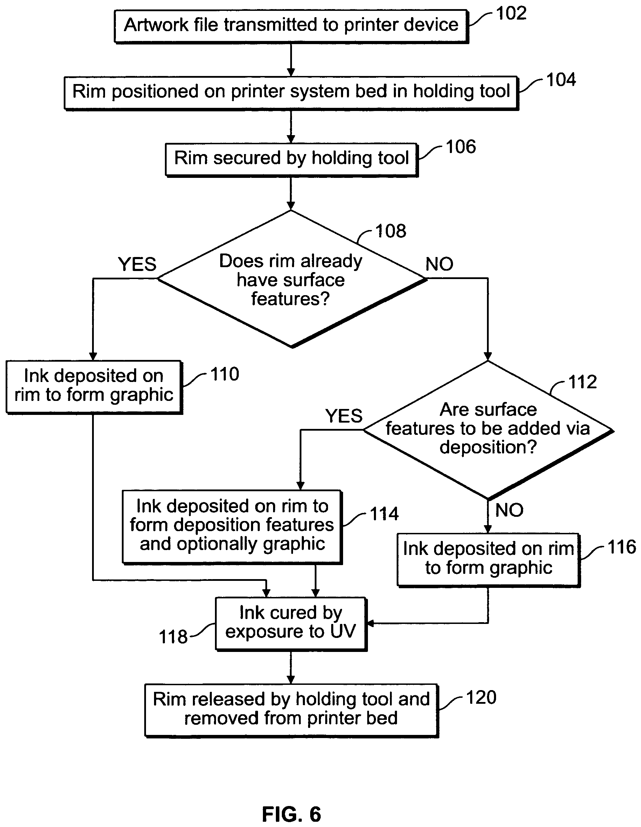

Fig. 6 is a flowchart with three methods of non-contact printing of bicycle rims. It will be understood that some of the steps can be performed in an order that differs from that depicted. Artwork is transmitted to the printer system 36 as is well-known and is converted to a form usable by the system in step 102. The artwork may be graphic and/or non-graphic in form. A rim 20 is positioned on the printer system bed 38 and in the holding tool 40 in step 104. The rim 20 is secured by the holding tool 40 in step 106.

At step 108, the determination is made whether the rim has surface features or not. If the rim 20 has existing surface features ink may be deposited to form a graphic in step 110. If the rim 20 does not have surface features in step 112 a determination is made whether surface features are to be formed by non-contact deposition. In step 114, the system 36 may be used to form deposition features 68 in the form of surface features and may also be used to form graphics during or after the surface features are formed. If surface features are not desired, in step 116, the system may print graphics and/or deposit a protective film, for example.

After or at the same time that graphics and/or surface features are deposited, the ink is cured in step 118 by exposure to UV light. When all ink is cured, the rim is released by the holding tool 40 and removed from the printer bed 38 in step 120.

While this invention has been described by reference to particular embodiments, it should be understood that numerous changes could be made within the spirit and scope of the inventive concepts described. Accordingly, it is intended that the invention not be limited to the disclosed embodiment, but that it have the full scope permitted by the language of the following claims.

## Claims

1. A rim (20) for a bicycle wheel having a center plane (CP), comprising:
a tire-engaging portion (24) located at an outer perimeter of the rim;
an inner perimeter portion (26) located radially inwardly from the tire-engaging portion (24);
a first sidewall (28);
a second sidewall (30) spaced from the first sidewall (28), the first and second sidewalls (28, 30) extending between the tire-engaging (24) and the inner perimeter portions (26); and
a plurality of surface features (32) formed in the first and second sidewalls (28, 30);
**characterized by**
a non-contact printed graphic disposed on one or both of the first and second sidewalls (28, 30), wherein the non-contact printed graphic is applied onto a non-smooth featured surface, and wherein the non-contact printed graphic substantially preserves the size and shape of the plurality of surface features (32).

2. The rim (20) of claim 1, wherein the surface features (32) are sized and shaped to create a turbulent surface layer when the wheel travels through air to reduce aerodynamic drag.

3. The rim (20) of claim 1 or 2, wherein the non-contact printed graphic is deposited with an inkjet printer (36).

4. The rim (20) of one of the preceding claims, further including an image receiving area (21, 22) located on the first and second sidewalls (28, 30), the image receiving area (21, 22) being within 30 degrees of parallel to the center plane (CP) of the rim (20); and wherein the non-contact printed graphic is disposed on at least some of the image receiving area (21, 22).

5. The rim (20) of claim 4, wherein the image receiving area (21, 22) is generally parallel to the center plane (CP).

6. The rim (20) of claim 4 or 5, wherein the image receiving area (21, 22) is located at a non-contact deposition distance (22) of less than about 6.5 mm.

7. The rim (20) as in any one of the preceding claims, wherein the rim (20) is made of FRP.

8. A method of apply graphics to a wheel rim (20), comprising:
providing a wheel rim (20) including a center plane (CP), a tire-engaging portion (24) located at an outer perimeter of the rim (20), an inner perimeter portion (26) located radially inwardly from the tire-engaging portion (24), a first sidewall (28), and a second sidewall (30) spaced from the first sidewall (28), the first and second sidewalls (28, 30) extending between the tire-engaging (24) and inner perimeter portions (26);
**characterized by**
depositing ink with a non-contact printer (36) on the first and second sidewalls (28, 30) at a deposition angle within about 30 degrees of parallel to the rim center plane (CP), wherein the ink is applied onto a non-smooth featured surface.

## Patentansprüche

1. Felge (20) für ein Fahrradrad mit einer Mittelebene (CP), umfassend:
einen Reifeneingriffsabschnitt (24), der sich an einem Außenumfang der Felge befindet;
einen Innenumfangsabschnitt (26), der sich von dem Reifeneingriffsabschnitt (24) aus radial nach innen befindet;
eine erste Seitenwand (28);
eine zweite Seitenwand (30), die von der ersten Seitenwand (28) beabstandet ist, wobei sich die ersten und zweiten Seitenwände (28, 30) zwischen dem Reifeneingriffsabschnitt (24) und dem Innenumfangsabschnitt (26) erstrecken; und
eine Mehrzahl von Oberflächenmerkmalen (32), die in den ersten und zweiten Seitenwänden (28, 30) gebildet sind;
**gekennzeichnet durch**
eine kontaktlos gedruckte Grafik, die auf einer oder beiden der ersten und zweiten Seitenwände (28, 30) angeordnet ist, wobei die kontaktlos gedruckte Grafik auf eine nicht glatte, mit Merkmalen versehene Oberfläche aufgetragen wird, und wobei die kontaktlos gedruckte Grafik die Größe und die Gestalt der Mehrzahl von Oberflächenmerkmalen (32) im Wesentlichen bewahrt.

2. Felge (20) nach Anspruch 1, wobei die Oberflächenmerkmale (32) dimensioniert und gestaltet sind, um eine turbulente Oberflächenschicht zu erstellen, wenn sich das Rad in der Luft dreht, um den Luftwiderstand zu reduzieren.

3. Felge (20) nach Anspruch 1 oder 2, wobei die kontaktlos gedruckte Grafik mit einem Tintenstrahldrucker (36) aufgebracht wird.

4. Felge (20) nach einem der vorhergehenden Ansprüche, ferner umfassend eine Bildempfangsfläche (21, 22), die sich auf den ersten und zweiten Seitenwänden (28, 30) befindet, wobei die Bildempfangsfläche (21, 22) innerhalb von 30 Grad parallel zur Mittelebene (CP) der Felge (20) liegt; und wobei die kontaktlos gedruckte Grafik auf mindestens einem Teil der Bildempfangsfläche (21, 22) angeordnet ist.

5. Felge (20) nach Anspruch 4, wobei die Bildempfangsfläche zu der Mittelebene (CP) im Allgemeinen parallel ist.

6. Felge (20) nach Anspruch 4 oder 5, wobei sich die Bildempfangsfläche (21, 22) in einem kontaktlosen Aufbringungsabstand von weniger als ungefähr 6,5 mm befindet.

7. Felge (20) nach einem der vorhergehenden Ansprüche, wobei die Felge (20) aus FRP besteht.

8. Verfahren zum Auftragen einer Grafik auf eine Radfelge (20), umfassend:
Bereitstellen einer Radfelge (20), die eine Mittelebene (CP), einen Reifeneingriffsabschnitt (24), der sich an einem Außenumfang der Felge (20) befindet, einen Innenumfangsabschnitt (26), der sich von dem Reifeneingriffsabschnitt (24) aus radial nach innen befindet, eine erste Seitenwand (28) und eine zweite Seitenwand (30), die von der ersten Seitenwand (28) beabstandet ist, umfasst, wobei sich die ersten und zweiten Seitenwände (28, 30) zwischen dem Reifeneingriffsabschnitt (24) und dem Innenumfangsabschnitt (26) erstrecken;
**gekennzeichnet durch**
Aufbringen von Tinte mit einem kontaktlosen Drucker (36) auf die ersten und zweiten Seitenwände (28, 30) in einem Aufbringungswinkel innerhalb von etwa 30 Grad parallel zur Mittelebene (CP) der Felge, wobei die Tinte auf eine nicht glatte, mit Merkmalen versehene Oberfläche aufgetragen wird.

## Revendications

1. Jante (20) pour une roue de bicyclette ayant un plan central (CP), comprenant :
une partie (24) d'engagement de pneumatique située au niveau d'un périmètre extérieur de la jante ;
une partie (26) de périmètre intérieur située radialement vers l'intérieur par rapport à la partie (24) d'engagement de pneumatique ;
une première paroi latérale (28) ;
une deuxième paroi latérale (30) espacée de la première paroi latérale (28), les première et deuxième parois latérales (28, 30) s'étendant entre les parties d'engagement de pneumatique (24) et de périmètre intérieur (26) ; et
une pluralité de caractéristiques (32) de surface formées dans les première et deuxième parois latérales (28, 30) ;
**caractérisée par**
un graphique imprimé sans contact disposé sur une ou les deux des première et deuxième parois latérales (28, 30), dans laquelle le graphique imprimé sans contact est appliqué sur une surface caractéristique non lisse, et dans laquelle le graphique imprimé sans contact préserve sensiblement la taille et la forme de la pluralité de caractéristiques (32) de surface.

2. Jante (20) selon la revendication 1, dans laquelle les caractéristiques (32) de surface sont dimensionnées et formées pour créer une couche superficielle turbulente lorsque la roue traverse l'air afin de réduire une traînée aérodynamique.

3. Jante (20) selon la revendication 1 ou 2, dans laquelle le graphique imprimé sans contact est déposé avec une imprimante à jet d'encre (36).

4. Jante (20) selon l'une des revendications précédentes, incluant en outre une zone (21, 22) de réception d'image située sur les première et deuxième parois latérales (28, 30), la zone (20, 21) de réception d'image étant à 30 degrés en parallèle au plan central (CP) de la jante (20) ; et dans laquelle le graphique imprimé sans contact est disposé sur au moins une partie de la zone (21, 22) de réception d'image.

5. Jante (20) selon la revendication 4, dans laquelle la zone (21, 22) de réception d'image est de manière générale parallèle au plan central (CP).

6. Jante (20) selon la revendication 4 ou 5, dans laquelle la zone (21, 22) de réception d'image est située à une distance (22) de dépôt sans contact de moins d'environ 6,5 mm.

7. Jante (20) selon l'une quelconque des revendications précédentes, dans laquelle la jante (20) est constitué d'un FRP.

8. Procédé d'application d'un graphique sur une jante (20) de roue, comprenant :
la prévision d'une jante (20) de roue incluant un plan central (CP), une partie (24) d'engagement de pneumatique située au niveau d'un périmètre extérieur de la jante (20), une partie (26) de périmètre intérieur située radialement vers l'intérieur par rapport à la partie (24) d'engagement de pneumatique, une première paroi latérale (28), et une deuxième paroi latérale (30) espacée de la première paroi latérale (28), les première et deuxième parois latérales (28, 30) s'étendant entre les parties d'engagement de pneumatique (24) et de périmètre intérieur (26) ;
**caractérisé par**
le dépôt d'encre avec une imprimante sans contact (36) sur les première et deuxième parois latérales (28, 30) à un angle de dépôt à environ 30 degrés en parallèle au plan central (CP) de jante, dans lequel l'encre est appliquée sur une surface caractéristique non lisse.
